(19) Europäisches Patentamt
European Patent Office
Office européen des brevets

(11) Veröffentlichungsnummer: **0 434 613 B1**

(12) **EUROPÄISCHE PATENTSCHRIFT**

(45) Veröffentlichungstag der Patentschrift: **03.05.95**

(21) Anmeldenummer: **90810948.1**

(22) Anmeldetag: **04.12.90**

(51) Int. Cl.[6]: **A01N 37/42**, //(A01N37/42, 39:02,39:04,37:48,37:22,37:26, 33:18,37:46,33:12,57:20,43:653, 35:10)

# (54) Synergistisch wirkendes Mittel und Verfahren zur Regulierung des Pflanzenwuchses.

(30) Priorität: **13.12.89 CH 4479/89**

(43) Veröffentlichungstag der Anmeldung:
**26.06.91 Patentblatt 91/26**

(45) Bekanntmachung des Hinweises auf die Patenterteilung:
**03.05.95 Patentblatt 95/18**

(84) Benannte Vertragsstaaten:
**CH DE ES FR GB IT LI**

(56) Entgegenhaltungen:
**EP-A- 0 224 441**
**EP-A- 0 338 986**

**C.R. WORTHING: "The Pesticide Manual", Ausdruck 8, 1987, Seiten 70-71,220-222,514-517,519,522-525, The British Corp. Protection Council,Thanton Heath, GB**

(73) Patentinhaber: **CIBA-GEIGY AG**
**Klybeckstrasse 141**
**CH-4002 Basel (CH)**

(72) Erfinder: **Kerber, Elmar, Dr.**
**Niederwihl 131**
**W-7883 Görwihl (DE)**
Erfinder: **Leypoldt, Gerhard**
**Ziegelackerweg 5**
**W-7888 Rheinfelden-Herten (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft synergistische Mittel, die pflanzenwuchsregulierende Wirkstoff-Kombinationen enthalten. Die erfindungsgemässen Mittel eignen sich zur Regulierung, insbesondere Hemmung des Wuchses von Nutzpflanzenkulturen.

Die Erfindung betrifft weiterhin ein Verfahren zum Regulieren, insbesondere Hemmen des Wachstums von Nutzpflanzenkulturen, vorzugsweise von Getreide, Gras und anderen Kulturen und die Verwendung der neuen Mittel.

Aus der EP-B-0 126 713 bzw. der US-A-4 693 475 ist der Ethylester der 4-Cyclopropanoyl-3,5-cyclohexandion-1-carbonsäure der Formel

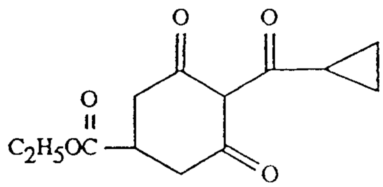

(I)

bekannt geworden. Dieser Wirkstoff besitzt gute, den Pflanzenwuchs regulierende, insbesondere hemmende Eigenschaften.

Aus der EP-A-0 338 986 sind synergistisch wirkende Gemische bestehend aus Cyclohexandioncarbonsäure-Derivaten und 5-(Trifluormethansulfonamido)-aceto-2,4-xylidid, und aus der EP-A-0 224 441 sind synergistisch wirkende Gemische bestehend aus Cyclohexandioncarbonsäure-Derivaten und Sulfonylharnstoffen bekannt geworden.

Es hat sich nun überraschenderweise gezeigt, dass die pflanzenwuchsregulierende Wirkung der Verbindung der Formel I durch Beimischung von bestimmten Wirkstoffen aus der Gruppe Phenolether in synergistischer Weise gesteigert werden kann.

Gegenstand der Erfindung sind daher synergistische Mittel zur Regulierung des Pflanzenwachstums, die neben inerten Träger-, Hilfs- und Zuschlagstoffen als Wirkstoff 4-Cyclopropionyl-3,5-cyclohexandion-1-carbonsäureethylester der Formel I

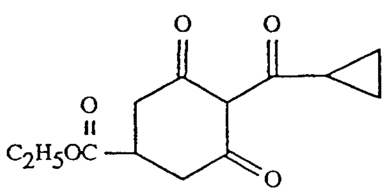

(I)

und zusätzlich eine synergistisch wirksame Menge eines Phenolethers der Formel II

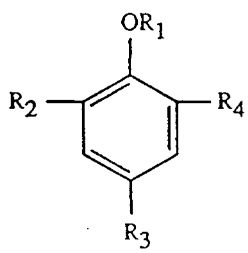

(II),

worin $R_1$ den Säure- oder $C_1$-$C_4$-Alkylestester-Rest $-CH_2COOH$, $CH(CH_3)COOH$, $(CH_2)_3COOH$ oder Nitrobenzoesäure-5-yl, $R_2$ Chlor oder Methyl, $R_3$ Chlor und $R_4$ Wasserstoff, Chlor oder Methyl bedeutet, enthält.

Die Erfindung betrifft ebenfalls die Verwendung der pflanzenwachstumsregulierenden Mittel, welche den Wirkstoff der Formel I zusammen mit einer synergistisch wirkenden Menge eines Wirkstoffes der Formel II enthält, z.B. zur Hemmung des Pflanzenwuchses.

Die Verbindungen der Formeln I und II sind bekannt.

4-Cyclopropionyl-3,5-cyclohexandion-1-carbonsäureethylester der Formel I wird z.B. wie folgt hergestellt.

Man tropft 30 ml Cyclopropanoylchlorid langsam in eine bei Raumtemperatur gerührte Lösung von 60 ml Cyclohexan-3,5-dion-1-carbonsäureäthylester und 25 ml Pyridin in 400 ml Dichloräthan. Wenn alles zugegeben ist, lässt man weitere 15 Stunden bei Raumtemperatur weiterrühren. Das Reaktionsgemisch wird dann filtriert und das Filtrat wird mit 1N Salzsäure gewaschen, getrocknet und zur Trockne eingedampft. Der Rückstand, das O-acylierte Zwischenprodukt wird in 200 ml Dichloräthan aufgenommen und zusammen mit 4 g 4-Dimethalaminopyridin während 4 Stunden am Rückfluss gekocht. Nach dem Abkühlen wird die Lösung mit 1N Salzsäure gewaschen, getrocknet, zur Trockne eingedampft. Der Rückstand wird zur Reinigung mit Hexan über eine kleine Silikagelsäule chromatographiert. Nach Verdampfen des Lösungsmittels erhält man den Aethylester der 4-Cyclopropionyl-3,5-cyclohexandion-1-carbonsäure als helles Oel mit Brechungsindex $n_D^{30}$ 1,5350.

Als Verbindungen der Formel II sind zu nennen:

IIa) der Methylester der 2-Nitro-5-(2,4-dichlorphenoxy)benzoesäure, common name "Bifenox", bekannt aus USP 3 776 715, siehe auch The Pesticide Index 7th Ed. by R. Worthing and S.B. Walker published by the British Crop Protection Council, Lavenham Press Ltd. 1983.

IIb) 2-(4-Chlor-2-methylphenoxy)-propionsäure, common name "Mecoprop" oder "MCPP", bekannt aus den GBP 820 180, siehe auch "The Pesticide Manual 7th Ed. 1983 7860".

IIc) 2-(2,4-Dichlorphenoxy)essigsäure, common name "2,4 D", siehe "The Pesticide Manual 7th Ed. 1983 3780".

IId) 2-(4-Chlor-2-methylphenoxy)essigsäure, common name "MCPA", siehe "The Pesticide Manual 7th Ed. 1983 7790".

IIe) 4-(4-Chlor-2-methylphenoxy)buttersäure, common name "MCPB", siehe "The Pesticide Manual 7th Ed. 1983 7810".

Pflanzenwachstumsregulatoren sind Substanzen, die in/an der Pflanze agronomisch erwünschte biochemische und/oder physiologische und/oder morphologische Veränderungen bewirken.

Die in den erfindungsgemässen Mitteln enthaltenen Wirkstoffe beeinflussen das Pflanzenwachstum je nach Applikationszeitpunkt, Dosierung, Applikationsart und Umweltbedingungen in verschiedener Weise. Die erfindungsgemässen Pflanzenwuchsregulatoren-Gemische können zum Beispiel das vegetative Wachstum von Pflanzen hemmen. Diese Art der Wirkung ist von Interesse auf Rasenflächen, im Zierpflanzenbau, in Obstplantagen, an Strassenböschungen, auf Sport- und Industrianalgen, aber auch bei der gezielten Hemmung von Nebentrieben wie bei Tabak. Im Ackerbau führt die Hemmung des vegetativen Wachstums bei Getreide über eine Halmverstärkung zu reduziertem Lager, ähnliche agronomische Wirkung erreicht man in Raps, Sonnenblumen, Mais und anderen Kulturpflanzen. Des weiteren kann durch Hemmung des vegetativen Wachstums die Anzahl Pflanzen pro Fläche erhöht werden. Ein weiteres Einsatzgebiet von Wuchshemmern ist die selektive Kontrolle von bodendeckenden Pflanzen in Plantagen oder weitreihigen Kulturen durch starke Wuchshemmung, ohne diese Bodendecker abzutöten, sodass die Konkurrenz gegenüber der Hauptkultur ausgeschaltet ist, die agronomisch positiven Effekte wie Erosionsverhinderung, Stickstoffbindung und Bodenlockerung aber erhalten bleiben.

Durch Pflanzenwachstumsregulatoren kann der Ertrag quantitativ (z.B. Latexfluss) oder qualitativ (z.B. Zuckergehalt) beeinflusst werden, die Apikaldominanz kann gebrochen und die Seitentriebbildung gefördert werden (z.B. Zierpflanzen), Blüten- und Fruchtfall können gefördert werden (z.B. Ausdünnen bei Obstbäumen zur Alternanzbrechung, Fruchtabszission bei Oliven zur mechanischen Ernte), die Fruchtreife kann mit Wachstumsregulatoren harmonisiert, beschleunigt oder verzögert werden (z.B. Kapselöffnen bei Baumwolle, Reifung von Tomaten oder Bananen).

Mit Wachstumsregulatoren können Pflanzen gegen Umweltstress wie Trockenheit, Kälte oder Bodensalzgehalt resistenter gemacht werden. Schliesslich kann mit Pflanzenwachstumsregulatoren die Entblätterung von Kulturpflanzen zeitlich gezielt induziert werden, so dass die mechanische Ernte in Kulturen wie Baumwolle, Kartoffeln oder Reben erleichtert bzw. ermöglicht wird.

Unter einem Verfahren zur Hemmung des Pflanzenwachstums ist eine Steuerung der natürlichen Pflanzenentwicklung zu verstehen, ohne den von genetischen Eigenschaften determinierten Lebenszyklus der Pflanze im Sinne einer Mutation zu verändern. Das Verfahren der Wuchsregulierung wird zu einem im Einzelfall zu bestimmenden Entwicklungszeitpunkt der Pflanze angewendet. Die Applikation der erfindungsgemässen Wirkstoffgemische kann vor oder nach dem Auflaufen der Pflanzen erfolgen, beispielsweise bereits auf die Samen oder die Sämlinge, auf Wurzeln, Knollen, Stengel, Blätter, Blüten oder andere Pflanzenteile. Dies kann z.B. durch Aufbringen des Wirkstoffes selbst oder in Form eines Mittels auf die Pflanzen und/oder durch Behandlung des Nährmediums der Pflanze (Erdboden) geschehen.

Bevorzugt setzt man die erfindungsgemässen synergistischen Mittel zur Wachstumshemmung in monokotylen Kulturen wie Getreide, Gräser, aber auch in dikotylen Kulturen ein, mit postemergenter Applikation.

Die erfindungsgemässen synergistischen Mischungen kommen im allgemeinen in Aufwandmengen von 50 g pro Hektar bis 5000 g pro Hektar zur Anwendung. Das Mengenverhältnis zwischen der Verbindung der Formel I und der synergistisch wirkenden Menge der Verbindung der Formel II kann in weiten Grenzen variieren. In der Regel liegt das Mengenverhältnis zwischen der Verbindung der Formel I und dem synergistisch wirkenden Mischpartner der Formel II zwischen 100:1 und 1:20, vorzugsweise zwischen 10:1 und 1:10.

Die vorliegende Erfindung schliesst auch die Herstellung agrochemischer Mittel ein, die gekennzeichnet sind durch das innige Vermischen der Aktivsubstanz mit einem oder mehreren hierin beschriebenen Substanzen. Eingeschlossen ist auch ein Verfahren zur Behandlung von Pflanzen, das sich durch Applikation der erfindungsgemässen Mittel auszeichnet.

Wirkstoffgemische von Verbindungen der Formel I und II werden üblicherweise in Form von Zusammensetzungen verwendet und können gleichzeitig oder nacheinander mit weiteren Wirkstoffen auf die zu behandelnde Fläche oder Pflanze gegeben werden.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemittel.

Die erfindungsgemässen Wirkstoffgemische werden dabei in unveränderter Form oder vorzugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen liegen im allgemeinen bei 10 g bis 5 kg Aktivsubstanz (AS) je ha; bevorzugt 100 g bis 2 kg AS/ha.

Die Formulierungen d.h. das Wirkstoffgemisch der Verbindung der Formel I mit einer Verbindung der Formel II und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäueester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder Ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden. Besonders geeignete Zusatzstoffe sind ferner Phospholipide.

Als oberflächenaktive Verbindungen kommen je nach Art des zu formulierenden Wirkstoffgemisches nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können. Ferner sind auch die Fettsäure-methyllaurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkalirest mit 8 bis 22 C-Atomen auf, wobei Alkyl auch den Alkylteil von Acylresten einschliesst, z.B. das Na-oder Ca-Salz der Ligninsulfonsäure, des Dodecylschwefelsäureesters oder eines aus natürlichen Fettsäuren hergestellt Fettalkoholsulfatgemisches.

Hierher gehören auch die Salze der Schwefelsäureester und Sulfonsäuren von Fettalkohol-Ethylenoxyd-Addukten. Die sulfonierten Benzimidazolderivate enthalten, vorzugsweise 2-Sulfonsäuregruppen und einem Fettsäurerest mit 8-22 C-Atomen. Alkylarylsulfonate sind z.B. die Na-, Ca- oder Triethanolaminsalze der Dodecylbenzolsulfonsäure, der Dibutylnaphthalinsulfonsäure, oder eins Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxyd-Adduktes in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, Die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykolethergruppen enthaltenden Polyethylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglycolether, Polypropylen-Polyethylenoxydaddukte, Tributylphenoxypolyethoxyethanol, Polyethylenglykol und Octylphenoxypolyethoxyethanol erwähnt.

Ferner kommen auch Fettsäureester von Polyoxyethylensorbiten wie das Polyoxyethylensorbitan-trioleat in Betracht.

Bei den kationischen Tensiden handelt es sich vor allem um quartäre Ammoniumsalze, welche als N-Substituenten mindestens einen Alylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylensulfate vor, z.B. das Stearyltrimethylammoniumchlorid oder das Benzyldi(2-chlorethyl)ethylammoniumbromid.

Die in der Formulierungstechnik gebräuchlichen Tenside sind u.a. in folgenden Publikationen beschrieben: "Mc Cutcheon's Detergents and Emulsifiers Annual" MC Publishing Corp., Ringwood New Jersey, 1980 Sisely and Wood, "Encyclopedia of Surface Active Agents", Chemical Publishin Co., Inc. New York, 1980.

Die agrochemischen Zubereitungen enthalten in der Regel 0,1 bis 99 %, insbesondere 0,1 bis 95 % erfindungsgemässes Wirkstoffgemisch, 99,9 bis 1 %, insbesondere 99,8 bis 5% feste oder flüssige Zusatzstoffe wovon 0 bis 25%, insbesondere 0,1 bis 25% eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Derartige agrochemische Mittel sind ein Bestandteil der vorliegenden Erfindung.

Den erfindungsgemässen Mitteln lassen sich andere biozide Wirkstoffe oder Mittel beimischen. So können die neuen Mittel ausser den genannten Verbindungen der Formel I und der Formel II z.B. Insektizide, Fungizide, Batkerizide, Fungistatika, Bakteriostatika oder Nematizide enthalten.

Im Einzelnen lassen sich die erfindungsgemässen Mittel allgemein nach den folgenen Beispielen formulieren:

Formulierungsbeispiele

Formulierungsbeispiele für synergistische Wirkstoffgemische der Formeln I und II (% = Gewichtsprozent)

| a) Spritzpulver | | | |
|---|---|---|---|
| | a) | b) | c) |
| Mischung Wirkstoff der Formel I und ein Wirkstoff der Formel II | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyäthelynglykoläther (7-8 Mol AeO) | - | 2 % | - |
| Hochdisperse Kieselsäure | 5 % | 10 % | 10 % |
| Kaolin | 62 % | 27 | - |

Der Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | |
|---|---|
| Mischung Wirkstoff der Formel I und ein Wirkstoff der Formel II | 10 % |
| Octylphenolpolyäthylenglykoläther (4-5 Mol AeO) | 3 % |
| Ca-Dodecylbenzolsulfonat | 3 % |
| Ricinusölpolyglykoläther (36 Mol AeO) | 4 % |
| Cyclohexanon | 30 % |
| Xylolgemisch | 50 % |

Aus diesen Konzentraten können durch Verdünnen mit Wasser Emulsionen jeder gewünschten Konzentration hergestellt werden.

| c) Stäubemittel | | |
|---|---|---|
| | a) | b) |
| Mischung Wirkstoff der Formel I und ein Wirkstoff der Formel II | 5 % | 8 % |
| Talkum | 95 % | - |
| Kaolin | - | 92 % |

Man erhält anwendungsfertige Stäubemittel, indem das Wirkstoffgemisch mit dem Träger vermischt und auf einer geeigneten Mühle vermahlen wird.

| d) Extruder Granulat | |
|---|---|
| Mischung Wirkstoff der Formel I und ein Wirkstoff der Formel II | 10 % |
| Na-Ligninsulfonat | 2 % |
| Carboxymethylcellulose | 1 % |
| Kaolin | 87 % |

Das Wirkstoffgemisch wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | |
|---|---|
| Mischung Wirkstoff der Formel I und ein Wirkstoff der Formel II | 3 % |
| Polyäthylenglykol (MG 200) | 3 % |
| Kaolin | 94 % |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | |
|---|---|
| Mischung Wirkstoff der Formel I und ein Wirkstoff der Formel II | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| Silikonöl in Form einer 75%igen wässrigen Emulsion | 1 % |
| Wasser | 32 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Es ist oft praktischer, den Wirkstoff der Formel I und den Mischpartner der Formel II einzeln zu formulieren und sie dann erst kurz vor dem Ausbringen im Applikator im gewünschten Mischungsverhältnis als "Tankmischung" im Wasser zusammenzubringen.

Ein synergistischer Effekt liegt immer dann vor, wenn die Wirkung der Wirkstoffkombination I und II grösser ist als die nach "Colby" zu erwartende Wirkung der einzeln applizierten Wirkstoffe.

Die zu erwartende wachstumshemmende Wirkung We für eine gegebene Kombination zweier Substanzen kann (vgl. COLBY, S.R., "Calculating synergistic and antagonstic response of herbicide combinations", Weeds 15, Seiten 20-22, 1967) wie folgt berechnet werden:

$$We = X + \frac{Y \cdot (100\text{-}X)}{100}$$

Dabei bedeuten:

X = Prozent Wachstumshemmung bei Behandlung mit der Verbindung der Formel I mit p kg Aufwandmenge pro Hektar im Vergleich zur unbehandelten Kontrolle (= 0 %).

Y = Prozent Wachstumshemmung bei Behandlung mit einer Verbindung der Formel II mit q kg Aufwandmenge pro Hektar im Vergleich zur unbehandelten Kontrolle.

We = Erwartete wachstumshemmende Wirkung (Prozent Wachstumshemmung im Vergleich zur unbehandelten Kontrolle) nach Behandlung mit der Verbindung der Formel I und II bei einer Aufwandmenge von p + q kg Wirkstoffmenge pro Hektar.

Ist die tatsächlich beobachtete Wirkung grösser als der zu erwartende Wert We, so liegt Synergismus vor.

Der synergistische Effekt der Kombinationen der Wirkstoffe I und II wird in den folgenden Beispielen demonstriert.

Biologische Beispiele

Beispiel 1: Wuchshemmung bei Getreide

Sommergerste der Sorte Iban wird in 15 cm-Kunststofftöpfen mit steriler Landerde angesät und in der Klimakammer bei einer Tagestemperatur von 10-15 °C und einer Nachttemperatur von 5-10 °C angezogen. Die Beleuchtungsdauer ist 13,5 Stunden pro Tag bei einer Intensität von ca. 25000 Lux.

Ca. 34 Tage nach der Saat und dem Ausdünnen auf 4 Pflanzen/Topf erfolgt die Applikation mit der in den Resultattabellen genannten Menge Wirkstoff oder Wirkstoffgemisch pro Hektare, in wässriger Spritzbrühe. Die Wasseraufwandmenge ist ca. 500 l/ha. Nach der Applikation werden die Pflanzen im Gewächshaus bei einer Tagestemperatur von mindestens 10 °C aufgestellt. Die Beleuchtungsdauer ist mind. 13,5 Stunden/Tag.

14 bis 35 Tage nach der Behandlung (die Dauer ist in den Resultattabellen angegeben) findet die Auswertung statt. Die Wirkung wird als Prozent Hemmung des Neuzuwachses im Vergleich zu unbehandelten Pflanzen angegeben. 0 % bedeutet keine Hemmwirkung (Zuwachs wie bei unbehandelten Kontrollpflanzen), 100 % bedeutet völliger Wuchsstopp. Hierbei wird die Höhe des Neuzuwachses in % zum Durchschnitt der unbehandelten Kontrollen dargestellt.

Tabelle 1:

| Wirkstoff/Aufwandmenge g/ha | | Auswertungszeitpunkt Tage nach Applikation | % Wuchshemmung beobachtet | erwartet (berechnet nach Colby) |
|---|---|---|---|---|
| I | IIa | 34 Tage | | |
| 250 | - | | 12 | - |
| 500 | - | | 20 | - |
| - | 1000 | | 0 | - |
| - | 2000 | | 0 | - |
| 250 + | 1000 | | 57 | 12 |
| 250 + | 2000 | | 59 | 12 |
| 500 + | 1000 | | 71 | 20 |
| 500 + | 2000 | | 69 | 20 |
| I | IIb | 34 Tage | | |
| 250 | - | | 12 | - |
| 500 | - | | 26 | - |
| - | 1000 | | 8 | - |
| - | 2000 | | 12 | - |
| 250 + | 1000 | | 82 | 19 |
| 250 + | 2000 | | 86 | 23 |
| 500 + | 1000 | | 91 | 32 |
| 500 + | 2000 | | 91 | 35 |
| I | IIc | 34 Tage | | |
| 250 | - | | 12 | - |
| 500 | - | | 26 | - |
| - | 500 | | 10 | - |
| - | 1000 | | 12 | - |
| 250 + | 500 | | 35 | 21 |
| 250 + | 1000 | | 42 | 23 |
| 500 + | 500 | | 60 | 33 |
| 500 + | 1000 | | 64 | 35 |

Tabelle 2:

| Wirkstoff/Aufwandmenge g/ha I | IIa | Auswertungszeitpunkt Tage nach Applikation 20 Tage | % Wuchshemmung beobachtet | erwartet (berechnet nach Colby) |
|---|---|---|---|---|
| 250 | - | | 15 | - |
| 500 | - | | 33 | - |
| - | 1500 | | 4 | - |
| - | 3000 | | 8 | - |
| 250 + | 1500 | | 38 | 18 |
| 250 + | 3000 | | 38 | 22 |
| 500 + | 1500 | | 49 | 36 |
| 500 + | 3000 | | 49 | 38 |

## Patentansprüche

1. Synergistisch wirkendes Mittel zur Regulierung des Pflanzenwachstums, dadurch gekennzeichnet, dass es neben inerten Träger-, Hilfs- und Zusatzstoffen, als Wirkstoff 4-Cyclopropionyl-3,5-cyclohexandion-1-carbonsäureethylester der Formel I

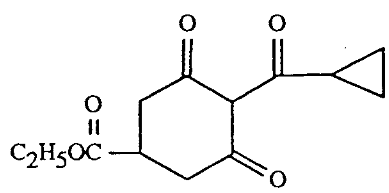

(I)

neben einer synergistisch wirksamen Menge eines weiteren Wirkstoffes ausgewählt aus Phenolethern der Formel II

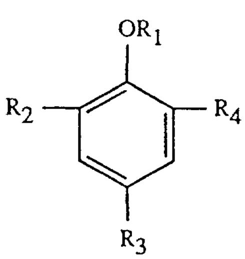

(II),

worin $R_1$ den Säure- oder $C_1$-$C_4$-Alkylester-Rest $-CH_2COOH$, $CH(CH_3)COOH$, $(CH_2)_3COOH$ oder Nitrobenzoesäure-5-yl, $R_2$ Chlor oder Methyl, $R_3$ Chlor und $R_4$ Wasserstoff, Chlor oder Methyl bedeutet, enthält.

2. Mittel zur Regulierung des Pflanzenwachstums gemäss Anspruch 1, dadurch gekennzeichnet, dass es neben inerten Zutaten und dem Wirkstoff der Formel I eine synergistisch wirkende Menge eines Phenolethers der Formel II

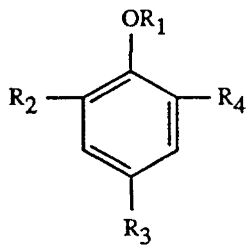

(II),

worin $R_1$ den Säure- oder $C_1$-$C_4$-Alkylestester-Rest $-CH_2COOH$, $CH(CH_3)COOH$, $(CH_2)_3COOH$ oder Nitrobenzoesäure-5-yl, $R_2$ Chlor oder Methyl, $R_3$ Chlor und $R_4$ Wasserstoff, Chlor oder Methyl bedeutet, oder im Verhältnis Wirkstoff der Formel I zu Wirkstoff der Formel II von 10:1 bis 1:10 enthält.

**3.** Mittel zur Regulierung des Pflanzenwachstums gemäss Ansprüchen 1 und 2, dadurch gekennzeichnet, dass es eine synergistisch wirkende Menge einer Verbindung enthält, die ausgewählt ist aus 2-Nitro-5-(2,4-dichlorphenoxy)-benzoesäure, 2-(4-Chlor-2-methylphenoxy-)-propionsäure, 2-(2,4-Dichlorphenoxy)-essigsäure, 2-(4-Chlor-2-methylphenoxy)-essigsäure und 4-(4-Chlor-2-methylphenoxy)-buttersäure.

**4.** Mittel zur Regulierung des Pflanzenwachstums gemäss Anspruch 1, dadurch gekennzeichnet, dass es neben 99,9 bis 5 % fester oder flüssiger Zusatzstoffe, wovon 0,1 bis 25 % eines Tensides 0,1 bis 95 % Wirkstoffgemisch der Verbindung der Formel I mit einer Verbindung der Formel II im Verhältnis 100:1 bis 1:10 enthält.

**5.** Verfahren zur Regulierung des Pflanzenwachstums, dadurch gekennzeichnet, dass man auf die Pflanzen oder deren Standort eine wirksame Menge eines Mittels gemäss Anspruch 1 appliziert resp. den Wirkstoff der Formel I und den Mischpartner der Formel II in Tankmischung appliziert.

**6.** Verfahren zur Hemmung des Pflanzenwachstums in Feldkulturen von Nutzpflanzen oder in Gräsern, dadurch gekennzeichnet, dass man auf die Pflanzen post-emergent eine wirksame Menge eines Mittels gemäss Anspruch 1 appliziert.

## Claims

**1.** A synergistically acting composition for regulating plant growth, which is characterized in that it contains, besides inert carriers, auxiliaries and adjuvants, as active component ethyl 4-cyclopropionyl-3,5-cyclohexanedione-1-carboxylate of the formula I

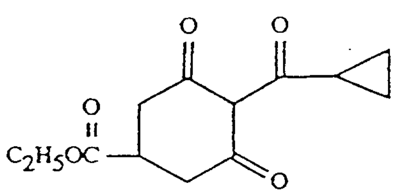

(I)

besides a synergistically active amount of a further active compound selected from among phenol ethers of the formula II

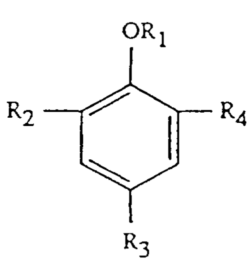

(II),

wherein $R_1$ is the acid radical or the $C_1$-$C_4$alkyl ester radical $-CH_2COOH$, $CH(CH_3)COOH$, $(CH_2)_3COOH$ or nitrobenzo-5-yl, $R_2$ is chlorine or methyl, $R_3$ is chlorine and $R_4$ is hydrogen, chlorine or methyl.

**2.** A composition for regulating plant growth according to claim 1, which is characterized in that it contains, besides inert adjuvants and the active compound of the formula I, a synergistically acting amount of a phenol ether of the formula II

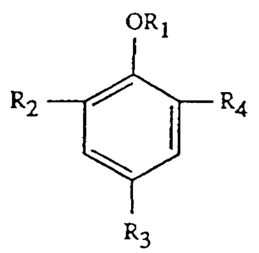

(II),

wherein $R_1$ is the acid radical or the $C_1$-$C_4$alkyl ester radical $-CH_2COOH$, $CH(CH_3)COOH$, $(CH_2)_3COOH$ or nitrobenzo-5-yl, $R_2$ is chlorine or methyl, $R_3$ is chlorine and $R_4$ is hydrogen, chlorine or methyl, or in the proportion active compound of the formula I to active compound of the formula II of 10:1 to 1:10.

**3.** A composition for regulating plant growth according to claims 1 and 2, which is characterized in that it contains a synergistically acting amount of a compound selected from among 2-nitro-5-(2,4-dichlorophenoxy)benzoic acid, 2-(4-chloro-2-methylphenoxy)propionic acid, 2-(2,4-dichlorophenoxy)acetic acid, 2-(4-chloro-2-methylphenoxy)acetic acid and 4-(4-chloro-2-methylphenoxy)butyric acid.

**4.** A composition for regulating plant growth according to claim 1, which is characterized in that it contains, besides 99.9 to 5% of solid or liquid adjuvants including 0.1 to 25% of a surfactant, 0.1 to 95% of a combination of active compounds of the compound of the formula I with a compound of the formula II in the proportion of 100:1 to 1:10.

**5.** A method of regulating plant growth, which is characterized in that one applies to the plants or their locus an active amount of a composition according to claim 1 or respectively a tank mix containing the active compound of the formula I and the mixing partner of the formula II.

**6.** A method of inhibiting plant growth in field cultures of useful plants or in grasses which is characterized in that one applies to the plants post emergence an active amount of a composition according to claim 1.

## Revendications

**1.** Produit à activité synergétique pour la régulation de la croissance des végétaux, caractérisé en ce qu'il contient, avec des véhicules, produits auxiliaires et additifs inertes, le 4-cyclopropionyl-3,5-cyclohexane-dione-1-carboxylate d'éthyle de formule I

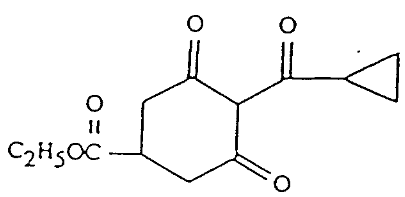

(I)

en tant que substance active, accompagné d'une quantité synergétique efficace d'une autre substance active choisie parmi les éthers de phénols de formule II

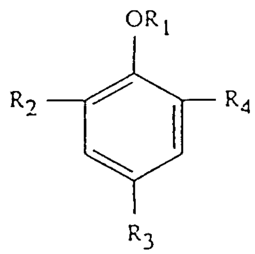

(II),

dans laquelle
R1 est le radical $-CH_2$ COOH, $CH(CH_3)$:COOH, $(CH_2)_3COOH$ ou nitrobenzo-5-yle à l'état d'acide libre ou d'ester alkylique en C1-C4, $R_2$ représente le chlore ou un groupe méthyle,
$R_3$ représente le chlore et $R_4$ l'hydrogène, le chlore ou un groupe méthyle.

**2.** Produit pour la régulation de la croissance des végétaux selon revendication 1, caractérisé en ce qu'il contient, avec des additifs inertes et la substance active de formule I, une quantité synergétique efficace d'un éther de phénol de formule II

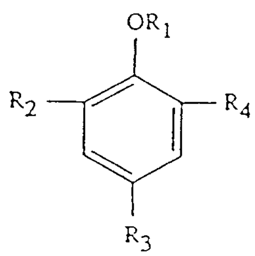

(II),

dans laquelle t représente le radical $-CH_2$ COOH, $CH(CH_3)COOH$, $(CH_2)_3COOH$ ou nitrobenzo-5-yle a l'état d'acide libre ou d'ester alkylique en C1-C4, $R_2$ représente le chlore ou un groupe méthyle, $R_3$ le chlore et $R_4$ l'hydrogène, le chlore ou un groupe méthyle, ou bien la substance active de formule I et la substance active de formule II dans des proportions relatives de 10 : 1 à 1 : 10.

**3.** Produit pour la régulation de la croissance des végétaux selon les revendications 1 et 2, caractérisé en ce qu'il contient une quantité synergétique active d'un composé choisi parmi l'acide 2-nitro-5-(2,4-dichlorophénoxy)-benzoique, l'acide 2-(4-chloro-2-méthylphénoxy)-propionique, l'acide 2-(2,4-dichlorophénoxy)-acétique, l'acide 2-(4-chloro-2-méthylphénoxy)-acétique et l'acide 4-(4-chloro-2-méthylphénoxy)-butyrique.

**4.** Produit pour la régulation de la croissance des végétaux selon revendication 1 caractérisé en ce que, avec 99,9 à 5 % d'additifs solides ou liquides dont 0,1 a 25 % d'un agent tensio-actif, il contient de 0,1 a 95 % du mélange de substances actives consistant en le composé de formule I et un composé de formule II dans des proportions relatives de 100 : 1 a 1 : 10.

**5.** Procédé pour la régulation de la croissance des végétauxy caractérisé en ce que l'on applique sur les végétaux ou leur habitat une quantité efficace d'un produit selon revendication 1 ou respectivement la substance active de formule I et le composé de formule II à l'état de mélange préparé en réservoir.

**6.** Procédé pour l'inhibition de la croissance des végétaux dans des cultures en plein champ de végétaux utiles ou dans des gazons, caractérisé en ce que l'on applique sur les végétaux, en post-levée, une quantité efficace d'un produit selon revendication 1.